# EUROPEAN PATENT APPLICATION

(11) **EP 3 166 359 A1**
(43) Date of publication of application: **10.05.2017**
(21) Application number: 16197314.4
(22) Date of filing: 04.11.2016
(51) Int. Cl.: H04W 48/16, H04W 88/06

(54) **NETWORK CONNECTING METHOD AND APPARATUS, COMPUTER PROGRAM AND RECORDING MEDIUM**

(30) Priority: 06.11.2015 CN 201510752344
(71) Applicant: Xiaomi Inc., Beijing 100085 (CN)
(72) Inventor: HUANG, Jiangtao, Beijing, Beijing 100085 (CN); KANG, Yanjun, Beijing, Beijing 100085 (CN); DAI, Lin, Beijing, Beijing 100085 (CN)
(74) Representative: dompatent von Kreisler Selting Werner - Partnerschaft von Patent- und Rechtsanwälten mbB

(57) **Abstract**

The present invention relates to a network connecting method and apparatus, a computer program and a recording medium. The method comprises: determining a home network of a terminal and a network mode supported by the terminal; acquiring a historical network connection record corresponding to the network mode, wherein the historical network connection record includes one or more network identities of networks to which the terminal was connected in the past; judging whether the home network exists in the historical network connection record based on the network identities; and connecting to a roaming network when the home network does not exist in the historical network connection record. With the technical solution, it can be quickly determined whether a terminal is in a roaming network environment. Furthermore, when the terminal is in the roaming network environment, it can quickly connect to a roaming network so that the time for the terminal to connect to the network is shortened.

## Description

### TECHNICAL FIELD

The present invention generally relates to the field of communications, and more particularly to a network connecting method and apparatus, a computer program and a recording medium.

### BACKGROUND

Due to mobility of a mobile terminal, the roaming function of the mobile terminal is a very important issue in any telecommunication system. In the related art, during a process for a multi-mode terminal to roam from its local network to another network, it is necessary to make a search in full band for each mode (such as LTE, TDS, WCDMA or GSM mode). When the local network is not found at any band of any mode, the terminal will launch roaming to register itself with the other network.

### SUMMARY

Embodiments of the invention provide a network connecting method and apparatus, a computer program and a recording medium as follows.

According to the first aspect of the present invention, a network connecting method is provided. The method comprises: determining a home network of a terminal and a network mode supported by the terminal; acquiring a historical network connection record corresponding to the network mode, wherein the historical network connection record includes one or more network identities of one or more networks to which the terminal was connected in the past; judging whether the home network exists in the historical network connection record based on the network identities; and connecting to a roaming network when the home network does not exist in the historical network connection record.

The solution according to the embodiment of the present invention may have the following advantageous effects.

With the above solution, it is possible for a terminal to search for its home network based on a historical network connection record of the terminal, and to connect to a roaming network when the home network does not exist in the historical network connection record. As such, there is no need to make a search for network in full band for all modes when a terminal connects to a network. Rather, the terminal can connect to a roaming network as long as the home network was not found among identities of networks connected in the past. Thus, it can be quickly determined whether a terminal is in a roaming network environment. Furthermore, when the terminal is in the roaming network environment, it can quickly connect to a roaming network so that the time for the terminal to connect to the network is shortened.

In an embodiment, the historical network connection record includes a historical frequency point record. The historical frequency point record includes one or more frequency points at which the terminal established connections in the past. Judging whether the home network exists in the historical network connection record based on the network identities comprises: judging whether the home network exists at one of the frequency points. Connecting to the roaming network when the home network does not exist in the historical network connection record comprises: connecting to the roaming network when the home network does not exist at any of the frequency points.

In this embodiment, the terminal is connected to a roaming network as long as the home network does not exist at any of the frequency points at which the terminal established connections in the past. As such, there is no need to make a search for networks in full band for all modes when a terminal connects to a network. Rather, it is only necessary to make a search at frequency points at which the terminal established connections in the past. Thus, it can be quickly determined whether a terminal is in a roaming network environment. Furthermore, when the terminal is in the roaming network environment, it can quickly connect to a roaming network so that the time for the terminal to connect to the network is shortened.

In an embodiment, the method further comprises: searching for one or more roaming networks at each of the frequency point, while judging whether the home network exists at the frequency point; and storing the roaming networks at the frequency point.

In this embodiment, by searching for both the home network and roaming networks at frequency points at which the terminal established connections in the past, the terminal can get knowledge of the roaming networks promptly.

In an embodiment, connecting to a roaming network when the home network does not exist in the historical network connection record comprises: acquiring a preset roaming network set when the home network does not exist at any of the frequency points; judging whether the roaming networks at the frequency points belong to the preset roaming network set; and when the roaming networks at the frequency points belong to the preset roaming network set, connecting to one of the roaming networks at the frequency points according to a priority order of the roaming networks in the preset roaming network set.

In this embodiment, it is possible to select one of the roaming networks to connect to according to a priority order of the roaming networks in the preset roaming network set. As such, the terminal can connect to the preset optimal network, so as to improve the quality of the network connection.

In an embodiment, connecting to the roaming network when the home network does not exist in the historical network connection record comprises: connecting to one of the roaming networks at the frequency points, based on signal strengths from the roaming networks.

In this embodiment, it is possible to select one of the roaming networks to connect based on signal strengths from the roaming networks. As such, the terminal can connect to the network with a strong signal strength, so as to improve the quality of the network connection.

In an embodiment, after connecting to the roaming network, the method further comprises: searching for networks at all frequency points according to a preset condition; judging whether the home network exists among the networks at all the frequency points; and switching from the currently connected roaming network to the home network, when the home network exists among the networks at all the frequency points.

In this embodiment, it is possible for the terminal to continue searching for a home network in full band after connecting to a roaming network, and to establish a connection to the home network upon finding the home network. As such, it is avoided that the roaming network is still used even if the terminal has moved from the roaming network environment to the home network environment, and the terminal's network connection can be switched timely based on the current environment.

In an embodiment, after judging whether the home network exists in the historical network connection record based on the network identities, the method further comprises: connecting to the home network when the home network exists in the historical network connection record.

In this embodiment, when the home network of the terminal can be found based on the historical network connection record of the terminal, the terminal connects to the home network. As such, the terminal can connect to the home network rapidly when in the home network environment.

According to the second aspect of the present invention, a network connecting apparatus is provided. The apparatus comprises: a determination module configured to determine a home network of a terminal and a network mode supported by the terminal; an acquisition module configured to acquire a historical network connection record corresponding to the network mode determined by the determination module, wherein the historical network connection record includes one or more network identities of one or more networks to which the terminal was connected in the past; a first judgment module configured to judge whether the home network exists in the historical network connection record based on the network identities acquired by the acquisition module; and a first connection module configured to connect to a roaming network when the first judgment module determines that the home network does not exist in the historical network connection record.

In an embodiment, the first judgment module comprises: a first judgment sub-module configured to, when the historical network connection record includes a historical frequency point record and the historical frequency point record includes one or more frequency points at which the terminal established connections in the past, judge whether the home network exists at one of the frequency points. The first connection module comprises: a first connection sub-module configured to connect to the roaming network when the first judgment sub-module determines that the home network does not exist at any of the frequency points.

In an embodiment, the apparatus further comprises: a first searching module configured to search for one or more roaming networks at each of the frequency point while judging whether the home network exists at the frequency point; and a storage module configured to store the roaming networks found at the frequency point by the first searching module.

In an embodiment, the first connection module comprises: an acquisition sub-module configured to acquire a preset roaming network set when the home network does not exist at any of the frequency points; a second judgment sub-module configured to judge whether the roaming networks at the frequency points belong to the preset roaming network set acquired by the acquisition sub-module; and a second connection sub-module configured to connect to one of the roaming networks at the frequency points according to a priority order of the roaming networks in the preset roaming network set, when the second judgment sub-module determines that the roaming networks at the frequency points belong to the preset roaming network set.

In an embodiment, the first connection module comprises: a third connection sub-module configured to connect to one of the roaming networks at the frequency points based on signal strengths from the roaming networks.

In an embodiment, the apparatus further comprises: a second searching module configured to search for networks at all the frequency points according to a preset condition, after a roaming network is connected to; a second judgment module configured to judge whether the home network exists among the networks at all the frequency points found by the second searching module; and a switching module configured to switch from the currently connected roaming network to the home network, when the second judgment module determines that the home network exists among the networks at all the frequency points.

In an embodiment, the apparatus further comprises: a second connection module configured to connect to the home network when the first judgment module determines that the home network exists in the historical network connection record.

According to the third aspect of the present invention, a network connecting apparatus is provided. The apparatus comprises: a processor; and a memory storing instructions executable by the processor. The processor is configured to: determine a home network of a terminal and a network mode supported by the terminal; acquire a historical network connection record corresponding to the network mode, wherein the historical network connection record includes one or more network identities of one or more networks to which the terminal was connected in the past; judge whether the home network exists in the historical network connection record based on the network identities; and connect to a roaming network when the home network does not exist in the historical network connection record.

In one particular embodiment, the steps of the network connecting method are determined by computer program instructions.

Consequently, according to a fourth aspect, the invention is also directed to a computer program for executing the steps of the network connecting method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart illustrating a network connecting method according to an exemplary embodiment.
Fig. 2 is a flowchart illustrating a network connecting method according to an exemplary embodiment.
Fig. 3 is a flowchart illustrating a step S14 in the network connecting method according to an exemplary embodiment.
Fig. 4 is a flowchart illustrating a network connecting method according to an exemplary embodiment.
Fig. 5 is a block diagram illustrating a network connecting apparatus according to an exemplary embodiment.
Fig. 6 is a block diagram illustrating a network connecting apparatus according to an exemplary embodiment.
Fig. 7 is a block diagram illustrating a network connecting apparatus according to an exemplary embodiment.
Fig. 8 is a block diagram illustrating a first connection module in the network connecting apparatus according to an exemplary embodiment.
Fig. 9 is a block diagram illustrating a first connection module in the network connecting apparatus according to an exemplary embodiment.
Fig. 10 is a block diagram illustrating a network connecting apparatus according to an exemplary embodiment.
Fig. 11 is a block diagram illustrating a network connecting apparatus according to an exemplary embodiment.
Fig. 12 is a block diagram illustrating a network connecting apparatus according to an exemplary embodiment.

### DETAILED DESCRIPTION

Reference will now be made in detail to certain embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

In the embodiments of the invention, a home network refers to a Home Public Land Mobile Network (HPLMN), and a roaming network refers to a roaming public land mobile network.

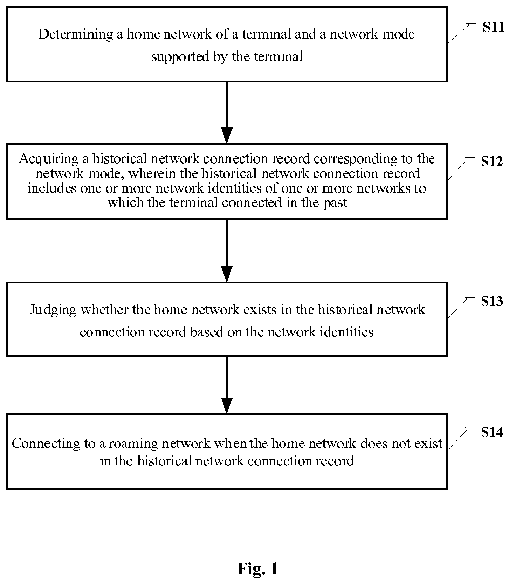

Fig. 1 is a flowchart illustrating a network connecting method according to an exemplary embodiment. The network connecting method is used in a terminal, which may be a mobile phone, a computer, a digital broadcast terminal, a messaging device, a gaming console, a tablet, a medical device, exercise equipment, a personal digital assistant or the like. As shown in Fig. 1, the method comprises the following steps S11-S14.

At step S11, a home network of the terminal and a network mode supported by the terminal are determined.

Here, when an operator makes a USIM card, a Mobile Country Code (MCC) for a home location of the USIM card can be written into the card. Therefore, the terminal can determine the home network by acquiring the MCC prewritten in the currently used USIM card. The network mode supported by the terminal is, for example, 2G/3G/4G mode.

At step S12, a historical network connection record corresponding to the network mode is acquired, wherein the historical network connection record includes one or more network identities of one or more networks to which the terminal was connected in the past.

Here, when the terminal supports multiple network modes, historical network connection records corresponding to the network modes can be acquired in order based on priorities of the network modes supported by the terminal.

At step S13, it is judged whether the home network exists in the historical network connection record based on the network identities.

When the terminal supports multiple network modes, it can be judged, in order based on priorities of the network modes supported by the terminal, whether the home network exists among the network identities in the historical network connection record corresponding to each network mode.

At step S14, the terminal connects to a roaming network when the home network does not exist in the historical network connection record.

When the terminal supports multiple network modes, it connects to a roaming network in a case where no home network exists among network identities in any historical network connection record corresponding to any network mode. In addition, during the execution of step S 13, if the home network is found, then the terminal directly connects to the home network.

With the technical solution provided by the embodiment of the present invention, it is possible for a terminal to search for its home network based on a historical network connection record of the terminal, and to connect to a roaming network when the home network does not exist in the historical network connection record. As such, there is no need to make a search for network in full band for all modes when a terminal connects to a network. Rather, the terminal can connect to a roaming network as long as the home network is not found among identities of networks connected in the past. Thus, it can be quickly determined whether a terminal is in a roaming network environment. Furthermore, when the terminal is in the roaming network environment, it can quickly connect to a roaming network so that the time for the terminal to connect to the network is shortened.

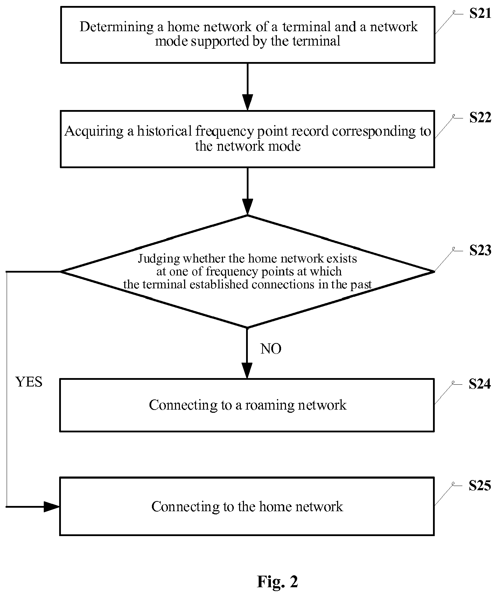

In one embodiment, a historical network connection record includes a historical frequency point record, and a historical frequency point record includes one or more frequency points at which the terminal established connection in the past. That is, the network identities included in the historical network connection record are frequency points. As shown in Fig. 2, the above method also may be implemented as the following steps S21-S25.

At step S21, a home network of the terminal and a network mode supported by the terminal are determined.

At step S22, a historical frequency point record corresponding to the network mode is acquired, wherein the historical frequency point record includes one or more frequency points at which the terminal established connections in the past.

At step S23, it is judged whether the home network exists at one of the frequency points at which the terminal established connections in the past. If the home network exists at one of the frequency points at which the terminal established connections in the past, step S25 is performed. If the home network does not exist at any of the frequency points at which the terminal established connections in the past, step S24 is performed.

At step S24, the terminal connects to a roaming network.

At step S25, the terminal connects to the home network.

In the present embodiment, the terminal connects to a roaming network as long as the home network is not found at the frequency points at which the terminal established connections in the past. As such, there is no need to make a search for networks in full band for all modes when a terminal connects to a network. Rather, it is only necessary to make a search at frequency points at which the terminal established connections in the past. Thus, it can be quickly determined whether a terminal is in a roaming network environment. Furthermore, when the terminal is in the roaming network environment, it can quickly connect to a roaming network so that the time for the terminal to connect to the network is shortened.

In one embodiment, the above method further comprises the following steps: searching for one or more roaming networks at each of the frequency point, while judging whether the home network exists at the frequency point; and storing the roaming networks at the frequency point. In other words, when performing the above step S23, the terminal searches for not only the home network but also roaming networks at frequency points at which the terminal established connections in the past, and stores the found roaming networks. If multiple roaming networks are found at the frequency points, the multiple roaming networks are stored as a set to facilitate selection of one of the roaming networks to connect to when the terminal needs to connect to a roaming network. In the present embodiment, by searching for both the home network and roaming networks at frequency points at which the terminal established connections in the past, the terminal can get the knowledge of the roaming networks promptly.

For example, network modes supported by the terminal include 2G, 3G and 4G. The 4G is in the highest priority, 3G is ranked the second, and 2G is ranked the last. In this case, when searching for a network, it may be determined whether the terminal is in the home network environment, and the terminal may connect to the network rapidly by the following steps.

Firstly, a search is made to determine whether the home network exists at frequency points at which the terminal established connections in the past in 4G mode, and meanwhile roaming networks are searched for at the frequency points. If the home network exists, the terminal connects to the home network. Otherwise, the roaming networks found at the frequency points in 4G mode are stored.

Secondly, a search is made to determine whether the home network exists at frequency points at which the terminal established connections in the past in 3G mode, and meanwhile roaming network are searched for at the frequency points. If the home network exists, the terminal connects to the home network. Otherwise, the roaming networks found at the frequency points in 3G mode are stored.

Finally, a search is made to determine whether the home network exists at frequency points at which the terminal established connections in the past in 2G mode, and meanwhile roaming networks are searched for at the frequency points. If the home network exists, the terminal connects to the home network. Otherwise, the roaming networks found at the frequency points in 2G mode are stored.

In the present embodiment, if no home network is found at frequency points at which the terminal established connections in the past in any of 4G, 3G and 2G modes, one of the roaming networks is selected from all the stored ones for the terminal to connect to.

With the technical solution, the terminal connects to a roaming network as long as the home network does not exist at frequency points at which the terminal established connections in the past. As such, there is no need to make a search for networks in full band when a terminal connects to a network. Rather, it is only necessary to make a search at frequency points at which the terminal established connections in the past. Therefore, it can be quickly determined whether a terminal is in a roaming network environment. Furthermore, when the terminal is in the roaming network environment, it can quickly connect to a roaming network so that the time for the terminal to connect to the network is shortened.

In one embodiment, when no home network exists at any of the frequency points at which the terminal established connections in the past in all network modes supported by the terminal, one roaming network may be selected from the stored ones to register the terminal therewith and to connect the terminal thereto. Thus, step S14 may be implemented in two manners as follows.

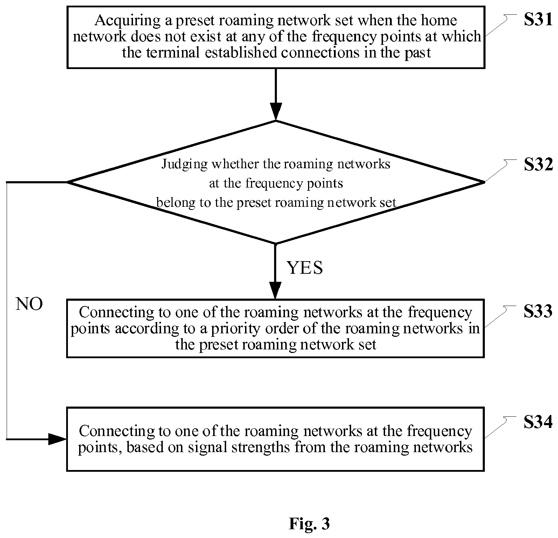

In a first manner, as shown in Fig. 3, step S14 may be implemented as the following steps S31-S34.

At step S31, a preset roaming network set is acquired when the home network does not exist at any of the frequency points.

Here, the preset roaming network set is a set including multiple roaming networks preset by a user. The multiple roaming networks in the set may be assigned with priorities based on parameters like signal strengths from the roaming networks, home locations, network connection qualities and so on.

At step S32, it is judged whether the roaming networks at the frequency points belong to the preset roaming network set. If the roaming networks at the frequency points belong to the preset roaming network set, step S33 is performed. If the roaming networks at the frequency points do not belong to the preset roaming network set, step S34 is performed.

At step S33, the terminal connects to one of the roaming networks at the frequency points according to a priority order of the roaming networks in the preset roaming network set.

At step S34, the terminal connects to one of the roaming networks at the frequency points, based on signal strengths from the roaming networks.

With the embodiment provided by the first manner, when the roaming networks found belong to the preset roaming network set, it is possible to select one of the roaming networks to connect to according to a priority order of the roaming networks in the preset roaming network set. Also, when the roaming networks found do not belong to the preset roaming network set, it is possible to select one of the roaming networks to connect to, based on signal strengths from the roaming networks. As such, the terminal can connect to the optimal roaming network, so as to improve the quality of the network connection.

In a second manner, the step S 14 may be implemented by directly selecting one of the stored roaming networks found at the frequency points at which the terminal established connections in the past to connect to, based on signal strengths from the roaming networks, when no home network exists at the frequency points. In this way, it is possible to select one of the roaming networks to connect to, based on signal strengths from the roaming networks. As such, the terminal can connect to the network with the highest signal strength, so as to improve the quality of the network connection.

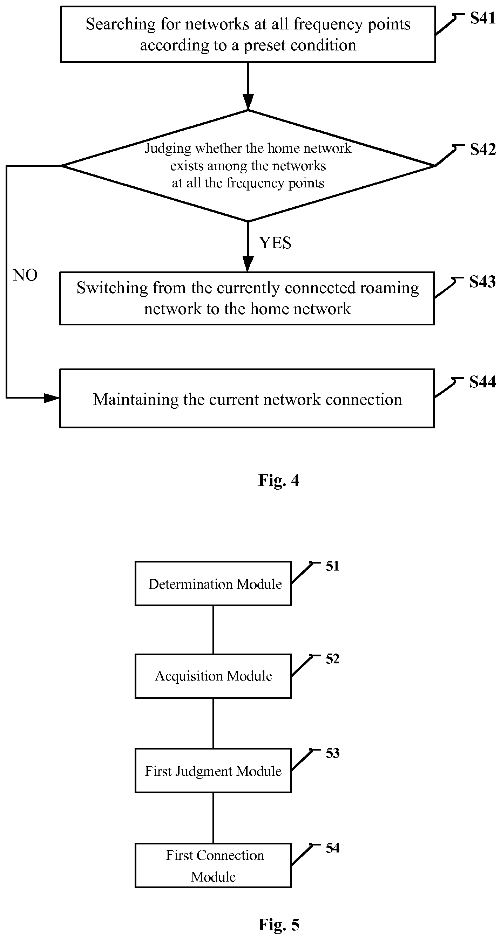

In one embodiment, after the terminal connects to a roaming network, the above method further comprises steps S41-S44, as shown in Fig. 4.

At step S41, networks are searched for at all frequency points according to a preset condition.

The preset condition may be set as a certain periodicity. For example, a search is made for networks in full band every hour. The preset condition may also be set according to the current geographical location of the terminal. For example, when a change of the current location of the terminal is detected, it can be considered that the preset condition is met, and then a search is made for networks in full band.

At step S42, it is judged whether the home network exists among the networks at all the frequency points. If the home network exists among the networks at all the frequency points, step S43 is performed. If the home network does not exist at any frequency point, step S44 is performed.

At step S43, the terminal is switched from the currently connected roaming network to the home network.

At step S44, the current network connection is maintained.

In the present embodiment, it is possible for the terminal to continue searching for a home network in full band after connecting to a roaming network, and to establish a connection to the home network upon finding the home network. As such, it is avoided that the roaming network is still used even if the terminal has moved from the roaming network environment to the home network environment, and the terminal's network connection can be switched timely based on the current environment.

In the following, there are described apparatus embodiments of the invention which may be used to implement the method embodiments of the invention.

Fig. 5 is a block diagram illustrating a network connecting apparatus according to an exemplary embodiment. The apparatus may be implemented as a part or entirety of an electronic device through software, hardware or the combination thereof. As shown in Fig. 5, the network connecting apparatus comprises a determination module 51, an acquisition module 52, a first judgment module 53 and a first connection module 54.

The determination module 51 is configured to determine a home network of a terminal and a network mode supported by the terminal.

When an operator products a USIM card, a Mobile Country Code (MCC) for a home location of the USIM card can be written into the card. Therefore, the determination module 51 can determine the home network by acquiring the MCC prewritten in the currently used USIM card. The network mode supported by the terminal is, for example, 2G/3G/4G mode.

The acquisition module 52 is configured to acquire a historical network connection record corresponding to the network mode determined by the determination module 51, wherein the historical network connection record includes one or more network identities of one or more networks to which the terminal was connected in the past.

When the terminal supports multiple network modes, the acquisition module 52 can acquire the historical network connection records corresponding to the network modes in order based on priorities of the network modes supported by the terminal.

The first judgment module 53 is configured to judge whether the home network exists in the historical network connection record based on the network identities acquired by the acquisition module 52.

When the terminal supports multiple network modes, first judgment module 53 can judge, in order based on priorities of the network modes supported by the terminal, whether the home network exists among the network identities in the historical network connection record corresponding to each network mode.

The first connection module 54 is configured to connect to a roaming network when the first judgment module 53 determines that the home network does not exist in the historical network connection record.

When the terminal supports multiple network modes, the first connection module 54 connects the terminal to a roaming network in a case where no home network exists in any historical network connection record corresponding to any network mode with regards to network identities. In addition, if the home network is found by the first judgment module 53, then the terminal directly connects to the home network.

With the apparatus provided by the embodiment of the present invention, it is possible for a terminal to search for its home network based on a historical network connection record of the terminal, and to connect to a roaming network when the home network does not exist in the historical network connection record. As such, there is no need to make a search for networks in full band for all modes when a terminal connects to a network. Rather, the terminal can connect to a roaming network as long as the home network is not found among identities of networks connected in the past. Thus, it can be quickly determined whether a terminal is in a roaming network environment. Furthermore, when the terminal is in the roaming network environment, it can quickly connect to a roaming network so that the time for the terminal to connect to the network is shortened.

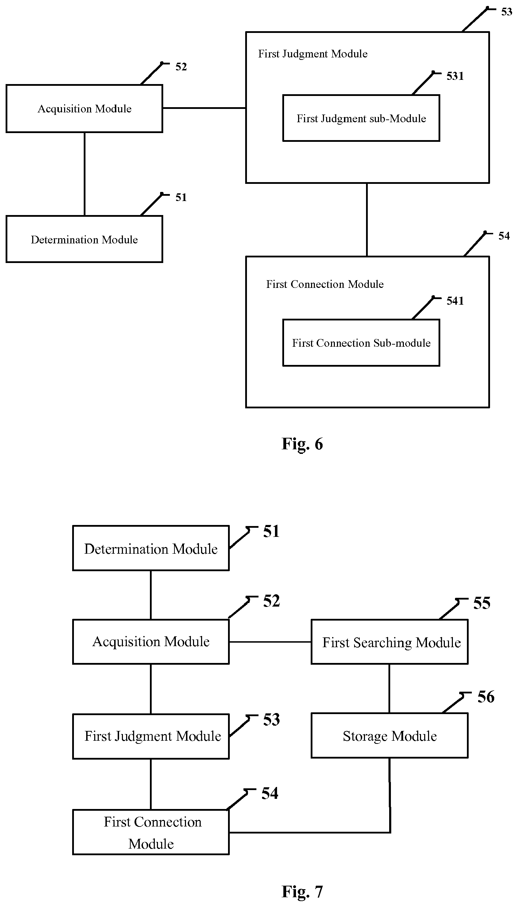

In one embodiment, as shown in Fig. 6, the first judgment module 53 comprises a first judgment sub-module 531.

The first judgment sub-module 531 is configured to, when the historical network connection record includes a historical frequency point record and the historical frequency point record includes one or more frequency points at which the terminal established connections in the past, judge whether the home network exists at one of the frequency points.

Correspondingly, the first connection module 54 comprises a first connection sub-module 541.

The first connection sub-module 541 is configured to connect to a roaming network when the first judgment sub-module 531 determines that the home network does not exist at any frequency point.

In the present embodiment, the terminal connected to a roaming network as long as the home network does not exist at any of the frequency points at which the terminal established connectionsin the past. As such, there is no need to make a search for networks in full band for all modes when a terminal connects to a network. Rather, it is only necessary to make a search at frequency points at which the terminal established connectionsin the past. Thus, it can be quickly determined whether a terminal is in a roaming network environment. Furthermore, when the terminal is in the roaming network environment, it can quickly connect to a roaming network so that the time for the terminal to connect to the network is shortened.

In one embodiment, as shown in Fig. 7, the above apparatus further comprises a first searching module 55 and a storage module 56.

The first searching module 55 is configured to search for one or more roaming networks at each of the frequency point while judging whether the home network exists at the frequency point.

The storage module 56 is configured to store the roaming networks found at the frequency point by the first searching module 55.

In other words, when searching for the home network at frequency points at which the terminal established connection in the past, the first searching module 55 also searches for roaming networks at the frequency points. And the storage module 56 stores the found roaming networks. If multiple roaming networks are found at all the frequency points, the multiple roaming networks may be stored as a set to facilitate selection of one of the roaming networks from the set to connect to when the terminal needs to connect to a roaming network. In the present embodiment, by searching for both the home network and roaming networks at frequency points at which the terminal established connections in the past, the terminal can get knowledge of the roaming network promptly.

For example, network modes supported by the terminal include 2G, 3G and 4G. The 4G mode is in the highest priority, 3G is ranked the second, and 2G is ranked the last. In this case, when searching for a network, it may be determined whether the terminal is in the home network environment, and the terminal may connect to the network rapidly by the following steps.

Firstly, a search is made and the first judgment module 53 determines whether the home network exists at frequency points at which the terminal established connections in the past in 4G mode. Meanwhile, the first searching module 55 searches for roaming networks at the frequency points. If the home network exists, the terminal connects to the home network. Otherwise, the storage module 56 stores the roaming networks found at the frequency points in 4G mode.

Secondly, a search is made and the first judgment module 53 determines whether the home network exists at frequency points at which the terminal established connections in the past in 3G mode. Meanwhile, the first searching module 55 searches for roaming networks at the frequency points. If the home network exists, the terminal connects to the home network. Otherwise, the storage module 56 stores the roaming networks found at the frequency points in 3G mode.

Finally, a search is made and the first judgment module 53 determines whether the home network exists at frequency points at which the terminal established connections in the past in 2G mode. Meanwhile, the first searching module 55 searches for roaming networks at the frequency points. If the home network exists, the terminal connects to the home network. Otherwise, the storage module 56 stores the roaming networks found at the frequency points in 2G mode.

In the present embodiment, if no home network is found at frequency points at which the terminal established connections in the past in any of 4G, 3G and 2G modes, the first connection module 54 selects one of the roaming networks from all the stored ones for the terminal to connect to.

Thus, the apparatus connects to a roaming network as long as the home network does not exist at frequency points at which the terminal established connections in the past. As such, there is no need to make a search for networks in full band when a terminal connects to a network. Rather, it is only necessary to make a search at frequency points at which the terminal established connections in the past. Therefore, it can be quickly determined whether a terminal is in a roaming network environment. Furthermore, when the terminal is in the roaming network environment, it can quickly connect to a roaming network so that the time for the terminal to connect to the network is shortened.

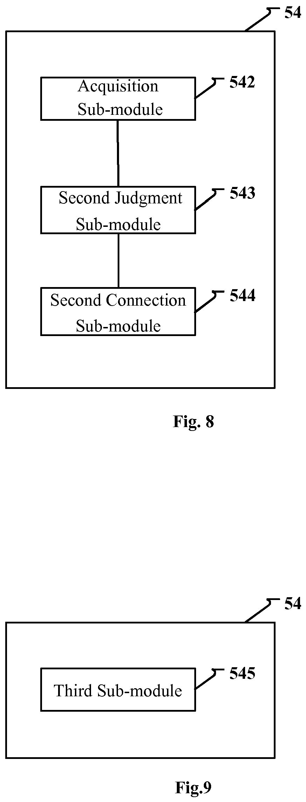

In one embodiment, as shown in Fig. 8, the first connection module 54 comprises an acquisition sub-module 542, a second judgment sub-module 543 and a second connection sub-module 544.

The acquisition sub-module 542 is configured to, when a home network does not exist at any of the frequency points, acquire a preset roaming network set.

The preset roaming network set is a set including multiple roaming networks preset by a user. The multiple roaming networks in the set may be assigned with priorities based on parameters like signal strengths from the roaming networks, home locations, network connection qualities and so on.

The second judgment sub-module 543 is configured to judge whether the roaming networks at the frequency points belong to the preset roaming network set acquired by the acquisition sub-module 542.

The second connection sub-module 544 is configured to, when the second judgment sub-module 543 determines that the roaming networks at the frequency points belong to the preset roaming network set, connect to one of the roaming networks at the frequency points according to a priority order of the roaming networks in the preset roaming network set.

With the present embodiment, when the roaming networks found belong to the preset roaming network set, it is possible to select one of the roaming networks to connect to according to a priority order of the roaming networks in the preset roaming network set. As such, the terminal can connect to the optimal roaming network, so as to improve the quality of the network connection.

In one embodiment, as shown in Fig. 9, the first connection module 54 comprises a third connection sub-module 545. The third connection sub-module 545 is configured to connect to one of the roaming networks at the frequency points, based on signal strengths from the roaming networks.

With the present embodiment, it is possible to select one of the roaming networks to connect to, based on signal strengths from the roaming networks. As such, the terminal can connect to the network with the highest signal strength, so as to improve the quality of the network connection.

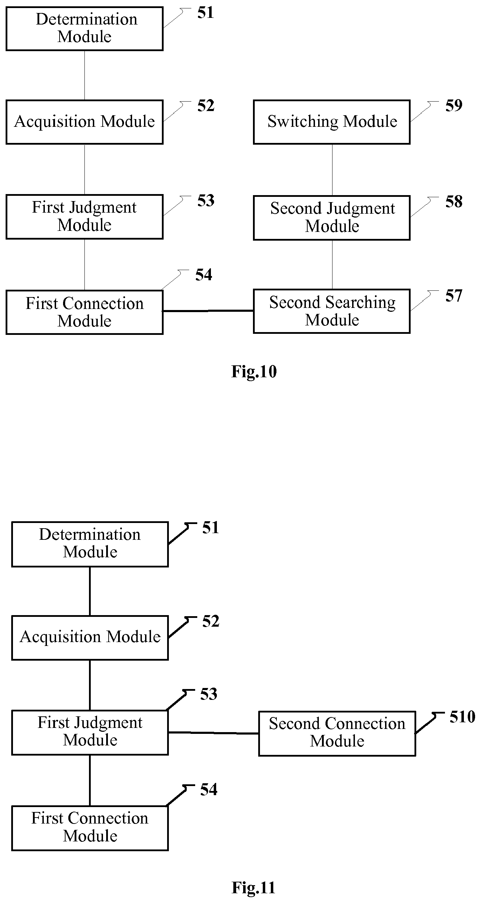

In one embodiment, as shown in Fig. 10, the above apparatus further comprises a second searching module 57, a second judgment module 58 and a switching module 59.

The second searching module 57 is configured to, after connecting to a roaming network, search for networks at all frequency points according to a preset condition.

The preset condition may be set as a certain periodicity. For example, a search is made for networks in full band every hour. The preset condition may also be set according to the current geographical location of the terminal. For example, when a change of the current location of the terminal is detected, it can be considered that the preset condition is met, and then a search is made for networks in full band.

The second judgment module 58 is configured to judge whether the home network exists among the networks at all frequency points found by the second searching module 57.

The switching module 59 is configured to switch from the currently connected roaming network to the home network when the second judgment module 58 determines that the home network exists among the networks at all frequency points.

In the present embodiment, it is possible for the terminal to continue searching for a home network in full-band after connecting to a roaming network, and to establish a connection to the home network upon finding the home network. As such, it is avoided that the roaming network is still used even if the terminal has moved from the roaming network environment to the home network environment, and the terminal's network connection can be switched timely based on the current environment.

In one embodiment, as shown in Fig. 11, the above apparatus further comprises a second connection module 510. The second connection module 510 is configured to connect to the home network when the first judgment module 53 determines that the home network exists in the historical network connection record.

In an exemplary embodiment, a network connecting apparatus is provided. The apparatus comprises: a processor; and a memory storing instructions executable by the processor. The processor is configured to: determine a home network of a terminal and a network mode supported by the terminal; acquire a historical network connection record corresponding to the network mode, wherein the historical network connection record includes one or more network identities of one or more networks to which the terminal was connected in the past; judge whether the home network exists in the historical network connection record based on the network identities; and connect to a roaming network when the home network does not exist in the historical network connection record.

The above processor may be further configured such that: the historical network connection record includes a historical frequency point record; the historical frequency point record includes one or more frequency points at which the terminal established connections in the past; judging whether the home network exists in the historical network connection record based on the network identities comprises: judging whether the home network exists at one of the frequency points; and connecting to a roaming network when the home network does not exist in the historical network connection record comprises: connecting to a roaming network when the home network does not exist at any of the frequency points.

The above processor may be further configured such that the method further comprises: searching for one or more roaming networks at each of the frequency point, while judging whether the home network exists at the frequency point; and storing the roaming networks at the frequency point.

The above processor may be further configured such that connecting to a roaming network when the home network does not exist in the historical network connection record comprises: acquiring a preset roaming network set when the home network does not exist at any of the frequency points; judging whether the roaming networks at the frequency points belong to the preset roaming network set; and when the roaming networks at the frequency points belong to the preset roaming network set, connecting to one of the roaming networks at the frequency points according to a priority order of the roaming networks in the preset roaming network set.

The above processor may be further configured such that connecting to a roaming network when the home network does not exist in the historical network connection record comprises: connecting to one of the roaming networks at the frequency points, based on signal strengths from the roaming networks.

The above processor may be further configured such that after connecting to the roaming network, the method further comprises: searching for networks at all frequency points according to a preset condition; judging whether the home network exists among the networks at all the frequency points; and switching from the currently connected roaming network to the home network, when the home network exists among the networks at all the frequency points.

The above processor may be further configured such that after judging whether the home network exists in the historical network connection record based on the network identities, the method further comprises: connecting to the home network when the home network exists in the historical network connection record.

For implementations of the functions of the respective units in the above apparatus, reference can be made to the implementations of the corresponding steps in the above methods and the details thereof will be omitted here.

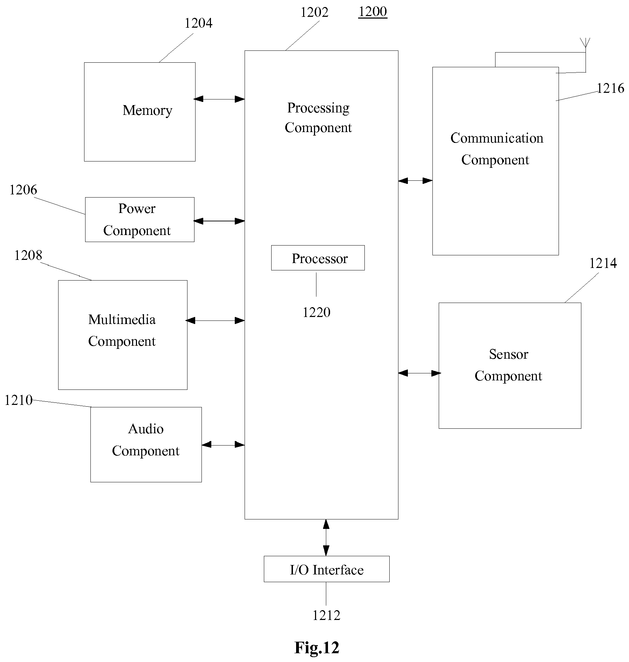

Fig. 12 is a block diagram illustrating a network connecting apparatus according to an exemplary embodiment. For example, the apparatus 1200 may be a mobile phone, a computer, a digital broadcast terminal, a messaging device, a gaming console, a tablet, a medical device, exercise equipment, a personal digital assistant or the like.

The apparatus 1200 may include one or more of the following components: a processing component 1202, a memory 1204, a power component 1206, a multimedia component 1208, an audio component 1210, an input/output (I/O) interface 1212, a sensor component 1214 and a communication component 1216.

The processing component 1202 generally controls the overall operations of the apparatus 1200, for example, display, phone call, data communication, camera operation and record operation. The processing component 1202 may include one or more processors 1220 to execute instructions to perform all or part of the steps in the above described methods. In addition, the processing component 1202 may include one or more modules to facilitate the interaction between the processing component 1202 and other components. For example, the processing component 1202 may include a multimedia module to facilitate the interaction between the processing component 1208 and the processing component 1202.

The memory 1204 is configured to store various types of data to support the operation performed on the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power supply management system, one or more power sources, and any other components associated with the generation, management, and distribution of power in the apparatus 1200.

The multimedia component 1208 includes a screen providing an output interface between the apparatus 1200 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive external multimedia data while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate wired or wireless communication between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast related information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 of the apparatus 1200, for performing the above-described methods. For example, the non-transitory computer-readable storage medium may be a ROM, a RAM, a CD-ROM, a magnetic tape, a floppy disc, an optical data storage device, and the like.

When executed by the processor of the apparatus 1200, the instructions in the non-transitory computer-readable storage medium cause the apparatus 1200 to perform the above network connecting method. The method includes: determining a home network of a terminal and a network mode supported by a terminal; acquiring a historical network connection record corresponding to the network mode, wherein the historical network connection record includes one or more network identities of one or more networks to which the terminal was connected in the past; judging whether the home network exists in the historical network connection record based on the network identities; and connecting to a roaming network when the home network does not exist in the historical network connection record.

The historical network connection record includes a historical frequency point record. The historical frequency point record includes one or more frequency points at which the terminal established connections in the past. Judging whether the home network exists in the historical network connection record based on the network identities comprises: judging whether the home network exists at one of the frequency points. Connecting to a roaming network when the home network does not exist in the historical network connection record comprises: connecting to a roaming network when the home network does not exist at any of the frequency points.

The method further comprises: searching for one or more roaming networks at each of the frequency point, while judging whether the home network exists at the frequency point; and storing the roaming networks at the frequency point.

Connecting to a roaming network when the home network does not exist in the historical network connection record comprises: acquiring a preset roaming network set when the home network does not exist at any of the frequency points; judging whether the roaming networks at the frequency points belong to the preset roaming network set; and when the roaming networks at the frequency points belong to the preset roaming network set, connecting to one of the roaming networks at the frequency points according to a priority order of the roaming networks in the preset roaming network set.

Connecting to a roaming network when the home network does not exist in the historical network connection record comprises: connecting to one of the roaming networks at the frequency points, based on signal strengths from the roaming networks.

After connecting to the roaming network, the method further comprises: searching for networks at all frequency points according to a preset condition; judging whether the home network exists among the networks at all the frequency points; and switching from the currently connected roaming network to the home network, when the home network exists among the networks at all the frequency points.

After judging whether the home network exists in the historical network connection record based on the network identities, the method further comprises: connecting to the home network when the home network exists in the historical network connection record.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the appended claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A network connecting method, comprising:
determining (S11)_a home network of a terminal and a network mode supported by the terminal;
acquiring (S12) a historical network connection record corresponding to the network mode, wherein the historical network connection record includes one or more network identities of one or more networks to which the terminal was connected in the past;
judging (S13) whether the home network exists in the historical network connection record based on the network identities; and
connecting (S14) to a roaming network when the home network does not exist in the historical network connection record.

2. The method according to claim 1, wherein
the historical network connection record includes a historical frequency point record;
the historical frequency point record includes one or more frequency points at which the terminal established connections in the past;
judging whether the home network exists in the historical network connection record based on the network identities comprises: judging (S23) whether the home network exists at one of the frequency points; and
connecting to the roaming network when the home network does not exist in the historical network connection record comprises: connecting (S24) to the roaming network when the home network does not exist at any of the frequency points.

3. The method according to claim 2, further comprises:
searching for one or more roaming networks at each of the frequency point, while judging whether the home network exists at the frequency point; and
storing the roaming networks at the frequency point.

4. The method according to claim 3, wherein connecting to the roaming network when the home network does not exist in the historical network connection record comprises:
acquiring (S31) a preset roaming network set when the home network does not exist at any of the frequency points;
judging (S32) whether the roaming networks at the frequency points belong to the preset roaming network set; and
when the roaming networks at the frequency points belong to the preset roaming network set, connecting (S33) to one of the roaming networks at the frequency points according to a priority order of the roaming networks in the preset roaming network set.

5. The method according to claim 3 or 4, wherein connecting to the roaming network when the home network does not exist in the historical network connection record comprises:
connecting (S34) to one of the roaming networks at the frequency points, based on signal strengths from the roaming networks.

6. The method according to claim 2, wherein after connecting to the roaming network, the method further comprises:
searching (S41) for networks at all frequency points according to a preset condition;
judging (S42) whether the home network exists among the networks at all the frequency points; and
switching (S43) from the currently connected roaming network to the home network, when the home network exists among the networks at all the frequency points.

7. The method according to claim 1, wherein after judging whether the home network exists in the historical network connection record based on the network identities, the method further comprises:
connecting (S25) to the home network when the home network exists in the historical network connection record.

8. A network connecting apparatus, comprising:
a determination module (51) configured to determine a home network of a terminal and a network mode supported by the terminal;
an acquisition module (52) configured to acquire a historical network connection record corresponding to the network mode determined by the determination module, wherein the historical network connection record includes one or more network identities of one or more networks to which the terminal was connected in the past;
a first judgment module (53) configured to judge whether the home network exists in the historical network connection record based on the network identities acquired by the acquisition module; and
a first connection module (54) configured to connect to a roaming network when the first judgment module determines that the home network does not exist in the historical network connection record.

9. The apparatus according to claim 8, wherein the first judgment module (53) comprises:
a first judgment sub-module (531) configured to, when the historical network connection record includes a historical frequency point record and the historical frequency point record includes one or more frequency points at which the terminal established connections in the past, judge whether the home network exists at one of the frequency points;
the first connection module (54) comprises:
a first connection sub-module (541) configured to connect to the roaming network when the first judgment sub-module determines that the home network does not exist at any of the frequency points.

10. The apparatus according to claim 9, further comprising:
a first searching module (55) configured to search for one or more roaming networks at each of the frequency point while judging whether the home network exists at the frequency point; and
a storage module (56) configured to store the roaming networks found at the frequency point by the first searching module.

11. The apparatus according to claim 10, wherein the first connection module (54) comprises:
an acquisition sub-module (542) configured to acquire a preset roaming network set when the home network does not exist at any of the frequency points;
a second judgment sub-module (543) configured to judge whether the roaming networks at the frequency points belong to the preset roaming network set acquired by the acquisition sub-module;
a second connection sub-module (544) configured to connect to one of the roaming networks at the frequency points according to a priority order of the roaming networks in the preset roaming network set, when the second judgment sub-module determines that the roaming networks at the frequency points belong to the preset roaming network set; and
a third connection sub-module (545) configured to connect to one of the roaming networks at the frequency points based on signal strengths from the roaming networks.

12. The apparatus according to claim 9, further comprising:
a second searching module (57) configured to search for networks at all the frequency points according to a preset condition, after a roaming network is connected to;
a second judgment module (58) configured to judge whether the home network exists among the networks at all the frequency points found by the second searching module;
a switching module (59) configured to switch from the currently connected roaming network to the home network, when the second judgment module determines that the home network exists among the networks at all the frequency points; and
a second connection module (510) configured to connect to the home network when the first judgment module determines that the home network exists in the historical network connection record.

13. A network connecting apparatus, comprising:
a processor (1202); and
a memory (1204); storing instructions executable by the processor (1202);;
wherein the processor (1202); is configured according to perform the method according to any of claims 1-7.

14. A computer program including instructions for executing the steps of a network connecting method according to any one of claims 1 to 7, when said program is executed by a computer.

15. A recording medium readable by a computer and having recorded thereon a computer program including instructions for executing the steps of a network connecting method according to any one of claims 1 to 7.
